# EUROPÄISCHE PATENTSCHRIFT

(11) **EP 3 087 881 B1**
(45) Veröffentlichungstag und Bekanntmachung des Hinweises auf die Patenterteilung: **26.08.2020**
(21) Anmeldenummer: 16167506.1
(22) Anmeldetag: 28.04.2016
(51) Int. Cl.: A47J 31/46

(54) **PUMPVORRICHTUNG**
PUMPING DEVICE
DISPOSITIF DE POMPAGE

(30) Priorität: 30.04.2015 DE 102015106793
(43) Veröffentlichungstag der Anmeldung: 02.11.2016
(73) Patentinhaber: Sysko AG, 7000 Chur (CH)
(72) Erfinder: Wisskirchen, Michael, 88410 Bad Wurzach (DE); Helbling, Norbert, 8645 Jona (CH)
(74) Vertreter: Daub, Thomas

(56) Entgegenhaltungen:
- EP-A1- 2 548 483
- WO-A1-2013/037076
- DE-A1-102008 028 031
- DE-A1-102010 043 862

## Beschreibung

### Stand der Technik

Die Erfindung betrifft eine Pumpvorrichtung nach dem Oberbegriff des Anspruchs 1.

Es ist bereits eine Pumpvorrichtung mit einer Pumpe, die zumindest eine Magnetspule aufweist, und mit einer Steuer- und/oder Regeleinheit vorgeschlagen worden. Die Dokumente EP 2 448 483 A1, DE 10 2008 028 031 A1, DE 10 2010 043 862 A1, WO 2013/037076 offenbaren Pumpvorrichtungen für einen Getränkeautomaten mit einer Pumpe und mit einer Steuer- und/oder Regeleinheit.

Die Aufgabe der Erfindung besteht insbesondere darin, einen effizienten Betrieb der Pumpe zu erreichen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Pumpvorrichtung für eine Haushaltsmaschine, insbesondere für einen Getränkeautomaten, mit einer Pumpe, die zumindest eine Magnetspule aufweist, und mit einer Steuer- und/oder Regeleinheit.

Es wird vorgeschlagen, dass die Steuer- und/oder Regeleinheit dazu vorgesehen ist, zumindest einen Pumpenparameter abhängig von zumindest einer Kenngröße einzustellen. Dadurch kann ein besonders effizienter Betrieb der Pumpe erreicht werden. Ein Leistungsabfall kann vermieden werden. Es kann eine geringe maximale Leistungsanforderung an die Pumpe erreicht werden. Es kann eine gleichbleibend hohe Qualität eines von dem Getränkeautomaten zubereiteten Getränks erreicht werden. Ferner kann eine besonders zuverlässige Pumpvorrichtung bereitgestellt werden. Unter einem "Getränkeautomaten" soll in diesem Zusammenhang insbesondere ein Automat zur Zubereitung und/oder zur Ausgabe von Getränken, wie beispielsweise Tee, Kakao oder Kaffee verstanden werden. Vorzugsweise ist der Getränkeautomat zu einer portionsweisen Ausgabe von Getränken, beispielsweise in einen Becher, ein Glas oder in eine Tasse vorgesehen. Bevorzugt weist ein von dem Getränkeautomaten bei einer Ausgabe ausgegebenes Volumen einer Flüssigkeit einen Wert zwischen 20 ml und 400 ml auf. Unter einer "Pumpe" soll in diesem Zusammenhang insbesondere eine Schwingkolbenpumpe verstanden werden. Unter einer "Steuer- und/oder Regeleinheit" soll insbesondere eine Einheit mit zumindest einer Steuer- und/oder Regelelektronik verstanden werden. Unter einer "Steuer- und/oder Regelelektronik" soll insbesondere eine Einheit mit zumindest einer Prozessoreinheit und mit zumindest einer Speichereinheit sowie mit einem in der Speichereinheit gespeicherten Betriebsprogramm verstanden werden. Unter einem "Pumpenparameter" soll in diesem Zusammenhang ein Volumenstrom für einen gegebenen Druck verstanden werden. Unter einer Kenngröße soll in diesem Zusammenhang insbesondere eine durch eine von einem Bediener mittelbar und unmittelbar festgelegte Größe verstanden werden, oder eine Größe, die einen Zustand der Pumpvorrichtung und/oder eine Betriebshistorie des Getränkeautomaten beschreibt, wie beispielsweise eine angeforderte Getränkeart, ein angefordertes Flüssigkeitsvolumen, eine Temperatur, ein Druck, eine Anzahl zurückliegender Ausgaben, eine Dauer von Ausgaben oder eine Dauer von Pausen zwischen Ausgaben verstanden werden. Unter einem "Bediener" soll in diesem Zusammenhang eine mit den Funktionen und dem Aufbau der Pumpvorrichtung vertraute Person verstanden werden. Vorzugsweise ist der Bediener in die Funktionen und den Aufbau der Pumpvorrichtung eingewiesen worden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Pumpe einen Arbeitsdruckbereich aufweist und die Steuer- und/oder Regeleinheit dazu vorgesehen ist, als Pumpenparameter einen Volumenstrom bei einem Druck in dem Arbeitsdruckbereich der Pumpe auf einen Sollwert von weniger als 90% eines Maximalwerts einzustellen, den die Pumpe bei einem Druck in dem Arbeitsdruckbereich für eine Temperatur der Magnetspule von 20 Grad Celsius bei ungeregeltem Betrieb mit Nennspannung fördert. Dadurch kann über eine Mehrzahl von Flüssigkeitsausgaben hinweg eine gleichbleibende Leistung der Pumpe erreicht werden. Es kann eine besonders einfache Steuer- und/oder Regeleinheit bereitgestellt werden. Es kann eine gleichbleibende Ausgabedauer erreicht werden. Es kann ein hoher Benutzerkomfort erreicht werden. Es kann eine Pumpvorrichtung für einen großen Einsatzbereich, insbesondere für verschiedene Nennspannungen, mit einer großen Zahl von Gleichteilen bereitgestellt werden. Dadurch können Entwicklungs- und/oder Produktionskosten gering gehalten werden. Unter einem "Arbeitsdruckbereich" soll in diesem Zusammenhang insbesondere ein Bereich von Druckwerten eines Gegendrucks verstanden werden, der bei einer vorgesehenen Benutzung des Getränkeautomaten an einem Ausgang der Pumpe auftritt. Vorzugsweise weist der Arbeitsdruckbereich Werte zwischen 0,5 bar und 3 bar, bevorzugt zwischen 3 bar und 8 bar und besonders bevorzugt zwischen 8 bar und 15 bar auf. Vorzugsweise beträgt der Sollwert des Volumenstroms 85%, bevorzugt 80% des Maximalwerts des Volumenstroms. Erfindungsgemäß ist die Steuer- und/oder Regeleinheit dazu vorgesehen, bei sonst gleichen Anforderungen einen Volumenstrom bei und/oder zwischen Ausgaben einer Flüssigkeitsportion konstant zu halten. Vorzugsweise ist die Steuer- und/oder Regeleinheit durch einen Bediener einrichtbar und/oder konfigurierbar ausgebildet. Alternativ ist denkbar, dass der Sollwert auf einen Volumenstrom bezogen wird, den die Pumpe bei einem Druck in dem Arbeitsdruckbereich bei ungeregeltem Betrieb mit Nennspannung bei einer Temperatur der Magnetspule fördert, die einer Beharrungstemperatur der Magnetspule entspricht. Unter einer "Beharrungstemperatur" der Magnetspule soll in diesem Zusammenhang insbesondere eine Grenztemperatur verstanden werden, welche die Pumpe bei einem Betrieb erreicht, wenn eine Kühlung und Erwärmung zumindest im Wesentlichen im Gleichgewicht sind. Die Beharrungstemperatur entspricht einer maximalen Temperatur der Spule bei einem vorgesehenen Betrieb. Vorzugsweise ist die Steuer- und/oder Regeleinheit dazu vorgesehen, den Volumenstrom auf einen Sollwert einzustellen, der weniger als 140%, bevorzugt weniger als 130%, besonders bevorzugt weniger als 120% und ganz besonders bevorzugt 100% des Volumenstroms entspricht, den die Pumpe bei der Beharrungstemperatur der Magnetspule liefert. Vorzugsweise ist die Steuer- und/oder Regeleinheit dazu vorgesehen, den Volumenstrom auf einen Sollwert einzustellen der mehr als 105%, vorzugsweise mehr als 110% und besonders bevorzugt mehr als 120% des Volumenstroms entspricht, den die Pumpe bei der Beharrungstemperatur der Magnetspule liefert.

In vorteilhafter Weise ist die Pumpe als eine Niederdruckpumpe ausgebildet und die Magnetspule der Pumpe weist eine Spulendrahtmasse auf, die einen Wert von weniger als 60 g aufweist oder die Pumpe ist als eine Mitteldruckpumpe ausgebildet und die Magnetspule der Pumpe weist eine Spulendrahtmasse auf, die einen Wert von weniger als 150 g aufweist oder die Pumpe ist als eine Hochdruckpumpe ausgebildet und die Magnetspule der Pumpe weist eine Spulendrahtmasse auf, die einen Wert von weniger als 160 g aufweist. Dadurch kann ein besonders großer Kostenanteil der Pumpe eingespart werden. Es kann eine besonders kostengünstige Pumpe bereitgestellt werden. Es kann ein besonders niedriger Bedarf an Spulendraht erreicht werden. Unter einer "Niederdruckpumpe" soll in diesem Zusammenhang insbesondere eine Pumpe verstanden werden, die einen Maximaldruck von weniger als 5 bar aufweist. Unter einer "Mitteldruckpumpe" soll in diesem Zusammenhang insbesondere eine Pumpe verstanden werden, die einen Maximaldruck von mindestens 8 bar und höchstens 15 bar aufweist. Unter einer "Hochdruckpumpe" soll in diesem Zusammenhang insbesondere eine Pumpe verstanden werden, die einen Maximaldruck von mindestens 15 bar aufweist. Unter einem "Maximaldruck" soll in diesem Zusammenhang insbesondere ein Druck verstanden werden, den die Pumpe bei einem verschlossenen Ausgang erzeugt. Vorzugsweise weist eine Niedrigdruckpumpe einen Arbeitsdruckbereich von 0,5 bar bis 3 bar, eine Mitteldruckpumpe einen Arbeitsdruckbereich von 3 bar bis 8 bar und eine Hochdruckpumpe einen Arbeitsdruckbereich von 8 bar bis 15 bar auf. Unter einem "Arbeitsdruckbereich" soll in diesem Zusammenhang insbesondere ein Druckbereich verstanden werden, in dem die Pumpe einen für einen Anwendungsfall ausreichenden Volumenstrom bereitstellt. Vorzugsweise ist die Pumpe als eine Niedrigdruckpumpe ausgebildet und weist eine Spulendrahtmasse von weniger als 54 g, bevorzugt von weniger als 43 g und besonders bevorzugt von weniger als 35 g auf. Vorzugsweise ist die Pumpe als eine Mitteldruckpumpe ausgebildet und weist eine Spulendrahtmasse von weniger als 120 g, bevorzugt von weniger als 95 g und besonders bevorzugt von weniger als 75 g auf. Vorzugsweise ist die Pumpe als eine Hochdruckpumpe ausgebildet und weist eine Spulendrahtmasse von weniger als 130 g, bevorzugt von weniger als 100 g und besonders bevorzugt von weniger als 80 g auf. Unter einer "Spulendrahtmasse" soll in diesem Zusammenhang insbesondere die Masse eine Spulendrahtes der Magnetspule verstanden werden, der in Windungen angeordnet und dazu vorgesehen ist, zur Erregung eines Magnetfeldes von Strom durchflossen zu werden. Vorzugsweise weist der Spulendraht Kupfer auf. Es ist auch denkbar, dass der Spulendraht ein anderes dem Fachmann geeignet erscheinendes Material aufweist, beispielsweise Aluminium. Vorzugsweise weist die Pumpe ein getrennt von Polschuhen der Pumpe ausgebildetes Flussleitelement auf, das dazu vorgesehen ist, eine von der Magnetspule der Pumpe erzeugte Magnetkraft zu verstärken.

Ferner wird vorgeschlagen, dass die Pumpe als eine Niederdruckpumpe ausgebildet ist, die Pumpe eine maximale hydraulische Leistung aufweist, die Magnetspule der Pumpe eine Spulendrahtmasse aufweist und ein Verhältnis von Spulendrahtmasse zu maximaler hydraulischer Leistung weniger als 80 g/W beträgt oder die Pumpe als eine Mitteldruckpumpe ausgebildet ist, die Pumpe eine maximale hydraulische Leistung aufweist, die Magnetspule der Pumpe eine Spulendrahtmasse aufweist und ein Verhältnis von Spulendrahtmasse zu maximaler hydraulischer Leistung weniger als 40 g/W beträgt oder die Pumpe als eine Hochdruckpumpe ausgebildet ist, die Pumpe eine maximale hydraulische Leistung aufweist, die Magnetspule der Pumpe eine Spulendrahtmasse aufweist und ein Verhältnis von Spulendrahtmasse zu maximaler hydraulischer Leistung weniger als 37 g/W beträgt. Dadurch kann eine Effizienz bei einem Betrieb der Pumpe weiter gesteigert werden. Unter einer "maximalen hydraulischen Leistung" soll in diesem Zusammenhang insbesondere eine über einem veränderlichen Druck maximale Leistung verstanden werden. Vorzugsweise weist eine als Niederdruckpumpe ausgebildete Pumpe ein Verhältnis von Spulendrahtmasse zu maximaler hydraulischer Leistung von weniger als 70 g/W, bevorzugt von weniger als 55 g/W und besonders bevorzugt von weniger als 50 g/W auf. Vorzugsweise weist eine als Mitteldruckpumpe ausgebildete Pumpe ein Verhältnis von Spulendrahtmasse zu maximaler hydraulischer Leistung von weniger als 35 g/W, bevorzugt von weniger als 25 g/W und besonders bevorzugt von weniger als 20 g/W auf. Vorzugsweise weist eine als Hochdruckpumpe ausgebildete Pumpe ein Verhältnis von Spulendrahtmasse zu maximaler hydraulischer Leistung von weniger als 30 g/W, bevorzugt von weniger als 24 g/W und besonders bevorzugt von weniger als 19 g/W auf.

In einer vorteilhaften Ausgestaltung ist die Pumpe dazu vorgesehen, mit einer Wechselspannung von etwa 230 V betrieben zu werden, und die Magnetspule der Pumpe weist höchstens 3800 Windungen auf oder die Pumpe ist dazu vorgesehen, mit einer Wechselspannung von 127 V oder weniger betrieben zu werden, und die Magnetspule der Pumpe weist höchstens 2100 Windungen auf. Dadurch kann eine benötigte Menge an Spulendraht weiter reduziert werden. Ein Preis für die Pumpe kann weiter reduziert werden. Es kann eine besonders kompakte Pumpe bereitgestellt werden. Unter einer "Windung" soll in diesem Zusammenhang insbesondere eine Drahtschlinge verstanden werden, die bezogen auf eine Achse der Magnetspule die Achse in Umfangsrichtung einmal umgibt. Bevorzugt ist die Pumpe als eine Hochdruckpumpe ausgebildet. Vorzugsweise ist die Pumpe dazu vorgesehen, mit einer Wechselspannung von 230 V betrieben zu werden und die Magnetspule weist weniger als 3600 Windungen und bevorzugt weniger als 3400 Windungen auf. Vorzugsweise ist die Pumpe dazu vorgesehen, mit einer Wechselspannung von 127 V oder weniger betrieben zu werden und die Magnetspule weist weniger als 1950 Windungen und bevorzugt weniger als 1800 Windungen auf.

In einer vorteilhaften Weise ist die Pumpe dazu vorgesehen, mit einer Wechselspannung von etwa 230 V betrieben zu werden, und die Magnetspule der Pumpe weist einen Spulendraht auf, der einen Durchmesser von weniger als 0,21 mm aufweist, oder die Pumpe ist dazu vorgesehen, mit einer Wechselspannung von 127 V oder weniger betrieben zu werden, und die Magnetspule der Pumpe weist einen Spulendraht auf, der einen Durchmesser von weniger als 0,38 mm aufweist. Dadurch kann ein Materialbedarf an Spulendraht weiter reduziert werden. Ein Bauraumbedarf kann weiter reduziert werden. Unter dem "Durchmesser" eines Spulendrahts soll in diesem Zusammenhang insbesondere der Durchmesser eines leitenden, vorzugsweise metallischen, Kerns des Spulendrahts, beispielsweise der Durchmesser eines Kupferquerschnitts, verstanden werden. Vorzugsweise weist der Spulendraht eine Isolationsschicht auf, deren Dicke zwischen 0,02 mm und 0,04 mm beträgt. Vorzugsweise beträgt der Durchmesser des Spulendrahts einer als Hochdruckpumpe ausgebildeten Pumpe, die zu einem Betrieb bei 230 V vorgesehen ist, weniger als 0,20 mm, bevorzugt weniger als 0,19 mm, besonders bevorzugt weniger als 0,18 mm. Vorzugsweise beträgt der Durchmesser des Spulendrahts einer als Hochdruckpumpe ausgebildeten Pumpe, die zu einem Betrieb bei 127 V oder weniger vorgesehen ist, weniger als 0,36 mm, bevorzugt weniger als 0,345 mm, besonders bevorzugt weniger als 0,33 mm.

Ferner wird vorgeschlagen, dass die Steuer- und/oder Regeleinheit dazu vorgesehen ist, die Pumpe in Abhängigkeit von einer Veränderung des elektrischen Widerstands der Magnetspule zu regeln. Dadurch kann ein besonders einfacher Aufbau der Steuer- und/oder Regeleinheit erreicht werden. Bei einer Erwärmung steigt der elektrische Widerstand der Magnetspule und eine Leistung der Pumpe sinkt. Vorzugsweise ist eine Kenngröße zur Regelung der Pumpe als der elektrische Widerstand der Magnetspule ausgebildet. Dadurch kann auf eine besonders einfache Weise eine Kenngröße zur Regelung der Pumpe ermittelt werden. Es kann auf eine besonders einfache Weise mittelbar eine Temperatur der Magnetspule ermittelt werden.

In einer vorteilhaften Ausgestaltung umfasst die Pumpvorrichtung einen signaltechnisch mit der Steuer- und/oder Regeleinheit verbundenen Temperatursensor, der dazu vorgesehen ist, eine Temperatur der Magnetspule zu erfassen. Dadurch kann eine besonders zuverlässige Regelung der Pumpe erreicht werden. Die Pumpe kann besonders sicher betrieben werden.

Ferner wird vorgeschlagen, dass die Steuer- und/oder Regeleinheit dazu vorgesehen ist, einen Volumenstrom der Pumpe in Abhängigkeit von der von dem Temperatursensor erfassten Temperatur einzustellen. Dadurch kann eine Erwärmung der Magnetspule wirkungsvoll begrenzt und eine Überhitzung der Magnetspule kann verhindert werden. Es kann eine besonders langlebige Pumpvorrichtung bereitgestellt werden.

In vorteilhafter Weise ist die Steuer- und/oder Regeleinheit dazu vorgesehen, einen Volumenstrom der Pumpe mittels eines Phasenanschnitts, einer Pulsweitenmodulation, einer Amplitudenanpassung und/oder einer Frequenzanpassung einer Stromzufuhr für die Pumpe einzustellen. Dadurch kann eine besonders wirkungsvolle und einfache Regelung der Pumpe erreicht werden. Vorzugsweise weist die Steuer- und/oder Regelelektronik der Steuer- und/oder Regeleinheit einen Mikrochip auf, der zu einem Phasenanschnitt, einer Pulsweitenmodulation, einer Amplitudenanpassung und/oder einer Frequenzanpassung einer Stromzufuhr vorgesehen ist.

Ferner wird vorgeschlagen, dass die Steuer- und/oder Regeleinheit dazu vorgesehen ist, einen Volumenstrom der Pumpe in Abhängigkeit von einer Getränkeart und/oder in Abhängigkeit von einer Getränkevariante einzustellen. Dadurch kann eine besonders flexibel einsetzbare Steuer- und/oder Regeleinheit bereitgestellt werden. Ein Benutzerkomfort kann weiter gesteigert erreicht werden. Unter eine "Getränkeart" soll in diesem Zusammenhang insbesondere eine Zubereitungsart verstanden werden, die insbesondere Inhaltsstoffe, eine Temperatur, einen Druck, eine Flüssigkeitsmenge und/oder eine Zubereitungsdauer festlegt. Unter einer "Getränkevariante" soll in diesem Zusammenhang insbesondere eine alternative Zubereitungsart eines Getränkes verstanden werden, die sich insbesondere durch eine Flüssigkeitsmenge und/oder durch einen Druck unterscheidet, wie beispielsweise Varianten von Espresso.

Ferner wird ein Getränkeautomat mit einer erfindungsgemäßen Pumpvorrichtung vorgeschlagen. Dadurch kann ein besonders zuverlässiger Getränkeautomat bereitgestellt werden, der Getränke in einer gleichbleibend hohen Qualität herstellt. Unter einem "Getränkeautomat" soll in diesem Zusammenhang insbesondere ein Automat verstanden werden, der zur Ausgabe von Getränken einer Getränkeart, vorzugsweise mehrerer Getränkearten, vorgesehen ist, beispielsweise ein Getränkevollautomat, Kaffeeautomat, Kaffeevollautomat, Kapselautomat, Espressobereiter, Kaffeebistro, Suppen- und/oder Brühenautomat. Vorzugsweise ist der Getränkeautomat als ein Haushaltsgerät ausgebildet. Alternativ kann der Getränkeautomat aber auch als ein Restaurantgerät und/oder als ein Selbstbedienungsautomat ausgebildet sein.

Ferner wird ein Verfahren zur Steuerung einer Haushaltsmaschine, insbesondere zur Steuerung eines Getränkeautomaten, mit einer Pumpe, die zumindest eine Magnetspule aufweist, und mit einer Steuer- und/oder Regeleinheit dadurch gekennzeichnet, dass die Steuer- und/oder Regeleinheit zumindest einen Pumpenparameter abhängig von zumindest einer Kenngröße einstellt, vorgeschlagen. Dadurch kann durch ein einfaches Verfahren eine besonders große Kostenersparnis für eine Pumpe erreicht werden. Eine begrenzte Leistungsfähigkeit einer Pumpe kann wirkungsvoll ausgeglichen werden.

Die erfindungsgemäße Pumpvorrichtung soll hierbei nicht auf die oben beschriebene Anwendung und Ausführungsform beschränkt sein. Insbesondere kann die erfindungsgemäße Pumpvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Getränkeautomaten,
- Fig. 2: einen Längsschnitt einer Pumpe des Getränkeautomaten,
- Fig. 3: eine schematische Darstellung eines Teils des Getränkeautomaten mit einer Pumpvorrichtung mit einer Hochdruckpumpe,
- Fig. 4: eine schematische Darstellung der Pumpvorrichtung für ein weiteres Ausführungsbeispiel und
- Fig. 5: eine schematische Darstellung der Pumpvorrichtung für ein drittes Ausführungsbeispiel.

### Beschreibung der Ausführungsbeispiele

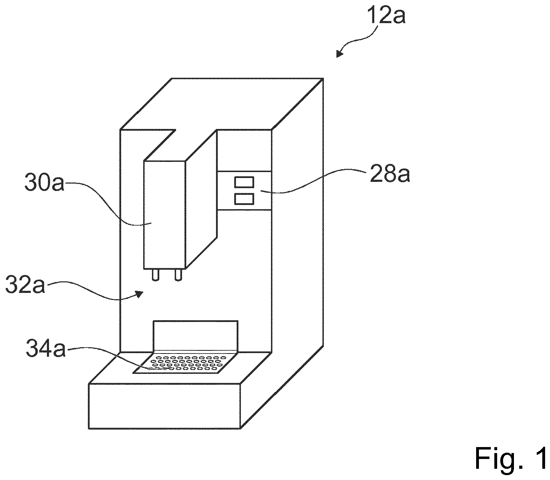

Figur 1 zeigt einen Getränkeautomat 12a, der zu einer Zubereitung und Ausgabe von Getränken, wie beispielsweise Tee, Kaffee oder Kakao vorgesehen ist. In dem vorliegenden Ausführungsbeispiel ist der Getränkeautomat 12a zum Einsatz in einem Haushalt vorgesehen und zur Ausgabe von heißem Wasser zur Zubereitung von Tee und zur Ausgabe von Kaffee vorgesehen. Der Getränkeautomat 12a ist für die Ausgabe der Getränkevarianten Kaffee, Espresso, Ristretto und Lungo vorgesehen.

Der Getränkeautomat 12a umfasst einen Vorratsbehälter 26a für Wasser, und einen weiteren nicht näher dargestellten Vorratsbehälter für Kaffee. Es ist denkbar, dass der Getränkeautomat 12a zusätzliche Vorratsbehälter umfasst, beispielsweise für Milchpulver, Kakao, Süßungsmittel oder für verschiedene Kaffeesorten. Der Getränkeautomat 12a umfasst ferner eine Bedieneinheit 28a, eine Ausgabeeinheit 30a, und eine Gefäßaufnahme 32a. Die Gefäßaufnahme 32a weist einen Abstellrost 34a auf. Der Getränkeautomat 12a umfasst ferner eine nicht näher dargestellte Heizeinheit, ein Mahlwerk und eine Brühgruppe. Es ist denkbar, dass der Getränkeautomat 12a eine Dampfeinheit umfasst, die zur Zubereitung von Milchschaum vorgesehen ist.

Der Getränkeautomat 12a ist dazu vorgesehen, die Getränke portionsweise auszugeben. Der Getränkeautomat 12a ist dazu vorgesehen, bei einer Ausgabe eine Flüssigkeitsportion in Abhängigkeit von einer Getränkeart und in Abhängigkeit von einer Getränkevariante auszugeben. Eine Flüssigkeitsportion weist in dem vorliegenden Ausführungsbeispiel einen Wert zwischen 20 ml und 400 ml auf.

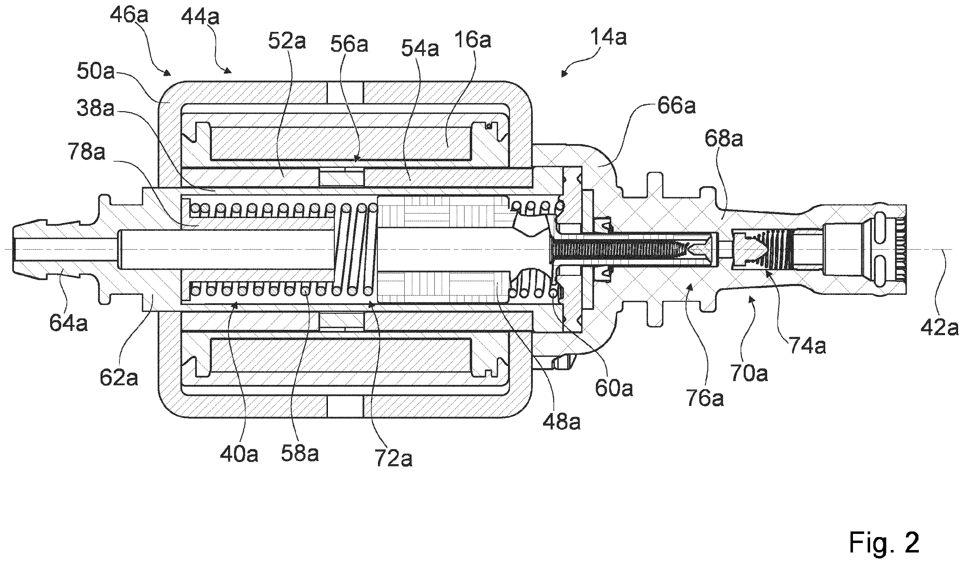

Der Getränkeautomat 12a umfasst ferner eine Pumpvorrichtung 10a mit einer Pumpe 14a (vgl. Figur 2). Die Pumpe 14a ist in dem vorliegenden Ausführungsbeispiel als eine Hochdruckpumpe ausgebildet und zur Förderung einer Flüssigkeit, beispielsweise Wasser, unter einem Druck von zumindest 8 bar vorgesehen. Die Pumpe 14a weist einen Arbeitsdruckbereich auf, der Werte von einschließlich 8 bar bis 15 bar umfasst. Die Pumpe 14a ist dazu vorgesehen, einen Volumenstrom der zu fördernden Flüssigkeit zu erzeugen. Der Getränkeautomat 12a weist eine Flüssigkeitsleitung 36a auf, die den Vorratsbehälter 26a für Wasser mit der Pumpe 14a verbindet. Die Pumpe 14a weist einen Arbeitsdruckbereich auf, der Werte von einschließlich 8 bar bis 15 bar umfasst. Die Pumpe 14a umfasst eine Pumpraumwandung 38a, die einen Pumpeninnenraum 40a begrenzt, der zumindest in einem Betriebszustand von einer zu fördernden Flüssigkeit durchströmt wird. Die Pumpe 14a weist in einem Betriebszustand eine Hauptströmrichtung der zu fördernden Flüssigkeit auf. Die Pumpe 14a weist eine Längsachse 42a auf, die parallel zu der Hauptströmrichtung der zu fördernden Flüssigkeit angeordnet ist. Die Längsachse 42a ist zentral in der Pumpe 14a angeordnet.

Die Pumpe 14a weist einen Magnetaktor 44a auf, der eine Magnetspule 16a, ein Spulengehäuse 46a und ein Kolbenelement 48a umfasst. Die Magnetspule 16a ist dazu vorgesehen, ein Magnetfeld zu erzeugen, das teilweise den Pumpeninnenraum 40a durchsetzt. Das Spulengehäuse 46a umfasst ein Kastenjoch 50a, das die Magnetspule 16a umgibt. Das Kastenjoch 50a ist dazu vorgesehen, einen von der Magnetspule 16a erzeugten magnetischen Fluss zu bündeln und/oder zu leiten. Die Magnetspule 16a ist in axialer Richtung vollständig innerhalb des Kastenjochs 50a angeordnet. Zur Führung des von der Magnetspule 16a erzeugten Magnetfeldes umfasst der Magnetaktor 44a ein einlassseitiges Polschuhelement 52a und ein auslassseitiges Polschuhelement 54a, zwischen deren Enden ein magnetisch isolierender Spalt 56a angeordnet ist. Die Polschuhelemente 52a, 54a sind zueinander fluchtend angeordnet. Die Polschuhelemente 52a, 54a sind axial beabstandet zueinander angeordnet. In dem vorliegenden Ausführungsbeispiel ist der magnetisch isolierende Spalt 56a lufterfüllt. Alternativ kann der magnetisch isolierende Spalt 56a mit einem anderen diamagnetischen oder paramagnetischen Material erfüllt sein, wie beispielsweise einem Kunststoff. Die Polschuhelemente 52a, 54a sind radial innerhalb der Magnetspule 16a angeordnet. Die Magnetspule 16a ist in radialer Richtung zwischen dem Kastenjoch 50a und den Polschuhelementen 52a, 54a angeordnet.

Weiter umfasst die Pumpe 14a eine auf das Kolbenelement 48a wirkende Pumpfeder 58a und eine Dämpfungsfeder 60a. Die Pumpfeder 58a stellt zumindest in einem Betriebszustand eine Betätigungskraft auf das Kolbenelement 48a bereit. Die Pumpfeder 58a ist in dem vorliegenden Ausführungsbeispiel als eine Schraubendruckfeder ausgebildet. Die Pumpfeder 58a ist zwischen der fest mit dem Spulengehäuse 46a verbundenen Pumpraumwandung 38a und dem Kolbenelement 48a abgestützt. Die Pumpfeder 58a ist koaxial zu der Längsachse 42a der Pumpe 14a angeordnet.

Die Pumpe 14a umfasst ein Gehäuseelement 62a, das als ein Einlasselement ausgebildet ist und das zu einem Anschluss der Flüssigkeitsleitung 36a für die zu fördernde Flüssigkeit vorgesehen ist. Das Gehäuseelement 62a umfasst einen Anschlussstutzen 64a. In dem vorliegenden Ausführungsbeispiel ist das Gehäuseelement 62a einstückig mit der Pumpraumwandung 38a ausgebildet. Die Pumpe 14a umfasst ferner ein weiteres Gehäuseelement 66a, das als ein Auslasselement ausgebildet ist. Das weitere Gehäuseelement 66a ist zu einem Anschluss einer Ausleitung für die zu fördernde Flüssigkeit vorgesehen.

Das weitere Gehäuseelement 66a umfasst einen Druckkammerzylinder 68a. Der Druckkammerzylinder 68a bildet eine zylindrische Druckkammer 70a aus und weist eine Einschnürung auf, welche die Druckkammer 70a in axialer Richtung in eine Kompressionskammer und eine Ventilkammer unterteilt. Die Einschnürung ragt in einer radialen Richtung in die Druckkammer 70a hinein. In einem Betriebszustand der Pumpe 14a durchströmt die zu fördernde Flüssigkeit nacheinander das als Einlasselement ausgebildete Gehäuseelement 62a, eine Vorkammer 72a und die Druckkammer 70a. Die Pumpe 14a umfasst ein Auslassventil 74a, das in der Ventilkammer des Auslasselements angeordnet ist. Das Auslassventil 74a ist als ein Rückschlagventil ausgebildet, welches eine Durchlassrichtung von der Kompressionskammer zu einem Auslass aufweist. Die Einschnürung bildet einen Ventilsitz des Auslassventils 74a aus. Das Auslassventil 74a umfasst ein axial beweglich gelagertes Verschlussteil und eine Schließfeder, die in einem montierten Zustand das Verschlussteil gegen den Ventilsitz drückt.

Das Kolbenelement 48a umfasst ein Ankerelement und ein Druckkolbenelement sowie ein Übergangselement, welches das Ankerelement mit dem Druckkolbenelement verbindet. Das Ankerelement ist vollständig in der Vorkammer 72a angeordnet und dazu vorgesehen, eine magnetische Kraft aufgrund des von der Magnetspule 16a erregten Magnetfelds in eine mechanische Kraft zu übersetzen. Zur Erzielung einer Pumpwirkung wird die Magnetspule 16a mit einer pulsförmigen Spannung bestromt, wodurch sich im Bereich des Pumpeninnenraums 40a ein sich periodisch veränderndes Magnetfeld einstellt. Das sich periodisch verändernde Magnetfeld bewirkt, dass das Kolbenelement 48a mit ansteigender Stärke des Magnetfelds zunächst aus einer Ruhestellung gegen die Kraft der Pumpfeder 58a ausgelenkt wird. Eine Bewegung des Kolbenelements entgegen der Kraft der Pumpfeder 58a entspricht einem Füllhub. Das Kolbenelement 48a überbrückt einen magnetischen Fluss im Bereich des magnetisch isolierenden Spalts 56a zwischen den Polschuhelementen 52a, 54a. Wird das Magnetfeld maximal, ist auch das Kolbenelement 48a maximal ausgelenkt. Sobald ein Strom durch die Magnetspule 16a reduziert wird und damit die Stärke des Magnetfelds wieder abfällt, wird das Kolbenelement 48a durch die Betätigungskraft der Pumpfeder 58a wieder in Richtung der Ruhestellung bewegt. Eine Bewegung des Kolbenelements 48a aufgrund der Betätigung der Pumpfeder 58a entspricht einem Druckhub. Der Magnetspule 16a ist dabei vorzugsweise eine Diodeneinheit vorgeschaltet, wodurch die Magnetspule 16a lediglich mit einer Halbwelle einer Wechselspannung bestromt wird. In dem dargestellten Ausführungsbeispiel ist die Magnetspule 16a für eine Wechselspannung von 230 V bei 50 Hz vorgesehen.

Das Druckkolbenelement umfasst ein Kolbenventil 76a, das strömungstechnisch zwischen der Vorkammer 72a und der Kompressionskammer angeordnet ist. Das Kolbenventil 76a ist in Form eines Rückschlagventils ausgebildet, welches eine Durchlassrichtung von der Vorkammer 72a in die Kompressionskammer aufweist. Das Kolbenventil 76a umfasst ein Verschlussteil und eine Schließfeder. Das Verschlussteil ist an einem auslassseitigen Ende des Druckkolbenelements angeordnet. In dem Füllhub, bei dem das Kolbenelement 48a durch das Magnetfeld entgegen der Kraft der Pumpfeder 58a bewegt wird, strömt Flüssigkeit von der Vorkammer 72a durch das Kolbenventil 76a in die Kompressionskammer. In dem anschließenden Druckhub, bei dem das Kolbenelement 48a durch die Kraft der Pumpfeder 58a bewegt wird, wird die Flüssigkeit aus der Kompressionskammer herausgedrückt. Der Maximaldruck, der dabei auf die Flüssigkeit wirkt, hängt insbesondere von der Kraft der Pumpfeder 58a ab. Ein Weg, um den das Kolbenelement 48a dabei bewegt wird, hängt von einer Ausgestaltung der Pumpe 14a ab. In einem montierten Zustand greift das Druckkolbenelement in die Kompressionskammer ein.

Die Pumpe 14a umfasst in dem vorliegenden Ausführungsbeispiel ein magnetisches Flussleitelement 78a, das zur Leitung eines von einem Magnetaktor 44a erzeugten magnetischen Flusses vorgesehen ist. Das Flussleitelement 78a ist dazu vorgesehen, einen Verlauf des Magnetfelds in dem Pumpeninnern insbesondere im Bereich eines Umkehrpunkts zwischen Druckhub und Füllhub des Kolbenelements 48a zu verändern und eine magnetische Kraft, die von dem Magnetaktor 44a hervorgerufen wird, auf das Kolbenelement 48a zu vergrößern. Das Flussleitelement 78a ist dazu vorgesehen, das Kolbenelement 48a magnetisch anzuziehen. Das Flussleitelement 78a ist dazu vorgesehen, zumindest zeitweise eine Kraft auf das Kolbenelement 48a auszuüben, die der Betätigungskraft der Pumpfeder 58a entgegenwirkt. Das Flussleitelement 78a ist aus einem magnetisierbaren Material ausgebildet. In dem vorliegenden Ausführungsbeispiel ist das Flussleitelement 78a aus magnetisierbarem Edelstahl ausgebildet.

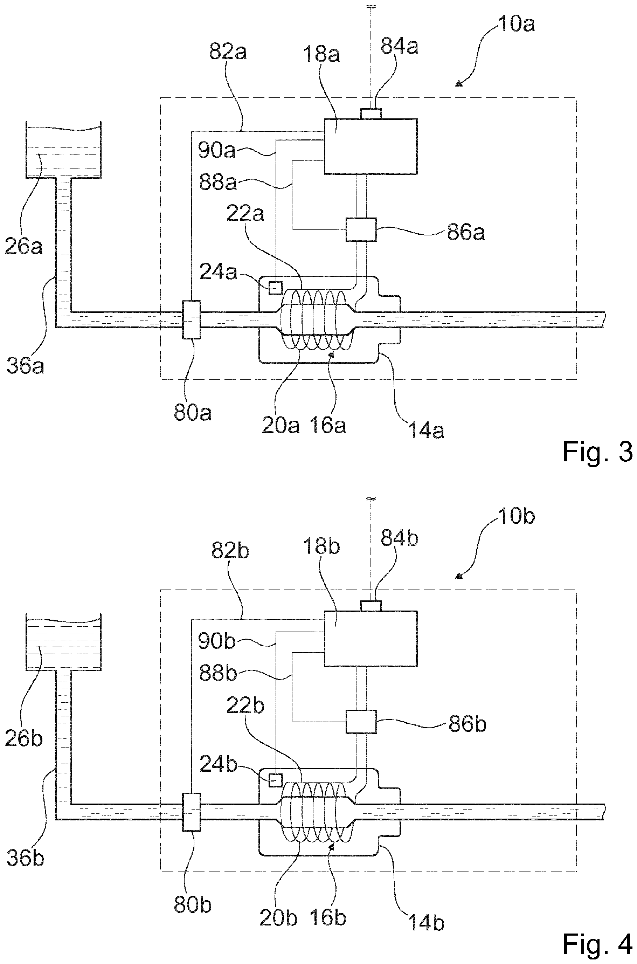

Die Pumpvorrichtung 10a umfasst eine Steuer- und Regeleinheit 18a, die dazu vorgesehen ist, zumindest einen Pumpenparameter, welcher ein Volumenstrom für einen gegebenen Druck ist, abhängig von zumindest einer Kenngröße einzustellen (vgl. Figur 3). Die Steuer- und Regeleinheit 18a umfasst eine nicht näher dargestellte Steuer- und Regelelektronik mit einer Prozessoreinheit und mit einer Speichereinheit. In dem vorliegenden Ausführungsbeispiel umfasst die Steuer- und Regelelektronik einen Mikrochip. Die Steuer- und Regeleinheit 18a weist eine Eingabeschnittstelle 84a auf. Die Pumpvorrichtung 10a weist eine Mehrzahl von Betriebsmodi zum Betrieb der Steuer- und Regeleinheit 18a auf. Die Pumpe 14a weist einen Maximalwert des Volumenstroms auf, der dem Volumenstrom entspricht, den die Pumpe 14a bei einer Temperatur von 20 Grad Celsius bei ungeregeltem Betrieb mit der Nennspannung von 230 V fördert.

Die Pumpvorrichtung 10a weist einen Durchflussmesser 80a zur Erfassung des Volumenstroms der Pumpe 14a auf. Der Durchflussmesser 80a ist in dem vorliegenden Ausführungsbeispiel als ein Flügelradzähler ausgebildet. Die Pumpvorrichtung 10a weist eine signaltechnische Verbindung 82a zwischen dem Durchflussmesser 80a und der Steuer- und Regeleinheit 18a auf. Die signaltechnische Verbindung 82a ist als eine Signalleitung ausgebildet. Die Steuer- und Regeleinheit 18a ist dazu vorgesehen, in einem Betriebsmodus den Maximalwert des Volumenstroms zu bestimmen. Die Steuer- und Regeleinheit 18a ist dazu vorgesehen, den Maximalwert des Volumenstroms zu speichern. In einem weiteren Betriebsmodus kann der der Maximalwert des Volumenstroms in die Steuer- und Regeleinheit 18a über die Eingabeschnittstelle 84a eingegeben und von der Steuer- und Regeleinheit 18a gespeichert werden. Die Steuer- und Regeleinheit 18a ist dazu vorgesehen, als Pumpenparameter einen Volumenstrom bei einem Druck in dem Arbeitsdruckbereich der Pumpe 14a auf einen Sollwert von weniger als 90% des Maximalwerts des Volumenstroms einzustellen.

In einem Betriebszustand der Pumpe 14a erfasst der Durchflussmesser 80a den Volumenstrom. In einem Betriebsmodus ermittelt die Steuer- und Regeleinheit 18a den tatsächlichen aktuellen Volumenstrom. In Abhängigkeit einer Abweichung des tatsächlichen Volumenstroms vom Sollwert des Volumenstroms erhöht oder verringert die Steuer- und Regeleinheit 18a eine der Pumpe 14a effektiv zugeführte elektrische Leistung. Die Steuer- und Regeleinheit 18a weist einen Toleranzbereich für den Volumenstrom auf. In dem vorliegenden Ausführungsbeispiel weist der Toleranzbereich eine untere Grenze auf, die um 10% bezogen auf den Sollwert von dem Sollwert abweicht.

In einem weiteren Betriebsmodus ermittelt die Steuer- und Regeleinheit 18a den Volumenstrom bei der Ausgabe der Flüssigkeitsportion. Für die Ausgabe einer weiteren Flüssigkeitsportion erhöht oder vermindert die Steuer- und Regeleinheit 18a die der Pumpe 14a zugeführte elektrische Leistung in Abhängigkeit der Abweichung des bei der Ausgabe der vorausgegangenen Flüssigkeitsportion ermittelten Volumenstroms von dem Sollwert und/oder in Abhängigkeit von einer Zeitspanne zwischen der Ausgabe der Flüssigkeitsportion zu der Ausgabe der vorausgegangenen Flüssigkeitsportion. Die Steuer- und Regeleinheit 18a hält den Volumenstrom jeweils während der Ausgabe einer Flüssigkeitsportion konstant.

Die Magnetspule 16a weist einen Spulendraht 22a auf, der in einer Mehrzahl von Windungen 20a angeordnet ist. In dem vorliegenden Ausführungsbeispiel weist die Spulendrahtmasse einen Wert von 85 g auf. Der Spulendraht 22a ist als ein Kupferdraht ausgebildet. In dem vorliegenden Ausführungsbeispiel weist die Pumpe 14a eine maximale hydraulische Leistung von etwa 4 W auf. Die Pumpe weist ein Verhältnis von Spulendrahtmasse zu maximaler hydraulischer Leistung von etwa 21 g/W auf. Die Magnetspule 16a weist in dem vorliegenden Ausführungsbeispiel eine Anzahl von 3600 Windungen 20a des Spulendrahts 22a auf. Die Windungen 20a verlaufen im Wesentlichen in Umfangsrichtung bezogen auf die Längsachse 42a der Pumpe 14a. Die Windungen 20a sind dicht gepackt angeordnet. Der Spulendraht 22a weist in dem vorliegenden Ausführungsbeispiel einen Durchmesser von 0,19 mm auf.

In einer alternativen Ausgestaltung ist die Pumpe 14a dazu vorgesehen, mit einer Wechselspannung von 127 V betrieben zu werden und die Magnetspule 16a weist eine Anzahl von 1950 Windungen 20a des Spulendrahts auf. Der Spulendraht 22a weist in der alternativen Ausgestaltung einen Durchmesser von 0,265 mm auf.

Die Pumpvorrichtung 10a weist eine Widerstandsmesseinheit 86a auf, die dazu vorgesehen ist, einen elektrischen Widerstand der Magnetspule 16a zu messen. In dem vorliegenden Ausführungsbeispiel ist die Widerstandsmesseinheit 86a dazu vorgesehen, einen elektrischen Widerstand mittels eines Spannungsabfalls an einem Vergleichswiderstand zu erfassen. Die Pumpvorrichtung 10a weist eine signaltechnische Verbindung 88a zwischen der Widerstandsmesseinheit 86a und der Steuer- und Regeleinheit 18a auf. Die Steuer- und Regeleinheit 18a ist dazu vorgesehen, die Pumpe 14a in Abhängigkeit von einer Zunahme des elektrischen Widerstands der Pumpe zu regeln. In einem Betriebsmodus ist die Kenngröße zur Einstellung des Volumenstroms als der elektrische Widerstand der Magnetspule 16a ausgebildet. In dem Betriebsmodus ermittelt die Steuer- und Regeleinheit 18a mittels der Widerstandsmesseinheit 86a einen elektrischen Widerstand der Magnetspule und regelt die Pumpe in Abhängigkeit von dem ermittelten elektrischen Widerstand. Die Steuer- und Regeleinheit 18a erhöht oder vermindert bei der Ausgabe der Flüssigkeitsportion den Volumenstrom in Abhängigkeit von dem ermittelten elektrischen Widerstand. In einem weiteren Betriebsmodus ermittelt die Steuer- und Regeleinheit 18a den elektrischen Widerstand der Magnetspule 16a bei der Ausgabe der Flüssigkeitsportion. Für die Ausgabe einer weiteren Flüssigkeitsportion erhöht oder vermindert die Steuer- und Regeleinheit 18a den Volumenstrom in Abhängigkeit der Abweichung des ermittelten elektrischen Widerstands von einem Sollwert und/oder in Abhängigkeit von einer Zeitspanne zwischen der Ausgabe der Flüssigkeitsportion zu der Ausgabe der vorausgegangenen Flüssigkeitsportion.

Die Pumpvorrichtung 10a weist einen signaltechnisch mit der Steuer- und/oder Regeleinheit 18a verbundenen Temperatursensor 24a auf, der dazu vorgesehen ist, eine Temperatur der Magnetspule 16a zu erfassen. Die Pumpvorrichtung 10a weist eine signaltechnische Verbindung 90a zwischen dem Temperatursensor 24a und der Steuer- und Regeleinheit 18a auf. Der Temperatursensor 24a ist in dem vorliegenden Ausführungsbeispiel als ein temperaturabhängiger Widerstand ausgebildet.

Die Steuer- und Regeleinheit 18a ist dazu vorgesehen, die Pumpe 14a in Abhängigkeit von der von dem Temperatursensor 24a erfassten Temperatur zu regeln. Die Steuer- und Regeleinheit 18a ist dazu vorgesehen, den Volumenstrom Abhängigkeit von der von dem Temperatursensor 24a erfassten Temperatur einzustellen. In einem Betriebsmodus ist die Kenngröße zur Einstellung des Volumenstroms als die von dem Temperatursensor 24a erfasste Temperatur ausgebildet. In dem Betriebsmodus ermittelt die Steuer- und Regeleinheit 18a mittels des Temperatursensors 24a eine Temperatur der Magnetspule 16a und regelt die Pumpe 14a in Abhängigkeit von der ermittelten Temperatur. Die Steuer- und Regeleinheit 18a erhöht oder vermindert bei der Ausgabe der Flüssigkeitsportion den Volumenstrom in Abhängigkeit von der ermittelten Temperatur. In einem weiteren Betriebsmodus ermittelt die Steuer- und Regeleinheit 18a die Temperatur der Magnetspule 16a bei der Ausgabe der Flüssigkeitsportion. Für die Ausgabe einer weiteren Flüssigkeitsportion erhöht oder vermindert die Steuer- und Regeleinheit 18a den Volumenstrom in Abhängigkeit einer Abweichung der ermittelten Temperatur von einem Sollwert und/oder in Abhängigkeit von einer Zeitspanne zwischen der Ausgabe der Flüssigkeitsportion zu der Ausgabe der vorausgegangenen Flüssigkeitsportion.

In einem Betriebsmodus regelt die Steuer- und Regeleinheit 18a die Pumpe 14a in Abhängigkeit von einer Zahl zurückliegender Ausgaben und/oder in Abhängigkeit einer Zeitspanne zwischen den zurückliegenden Ausgaben. In einem weiteren Betriebsmodus regelt die Steuer- und Regeleinheit 18a die Pumpe 14a in Abhängigkeit von einer Ausgabedauer der Flüssigkeitsportion und/oder in Abhängigkeit von einer Ausgabedauer zurückliegender Ausgaben und/oder in Abhängigkeit von der Zeitspanne zu zurückliegenden Ausgaben. In einem weiteren Betriebsmodus regelt die Steuer- und Regeleinheit 18a die Pumpe 14a in Abhängigkeit von einer Zahl von Pumpenhüben und/oder in Abhängigkeit von einer Zahl von Pumpenhüben zurückliegender Ausgaben und/oder in Abhängigkeit von der Zeitspanne zu zurückliegenden Ausgaben.

Die Steuer- und Regeleinheit 18a ist dazu vorgesehen, einen Volumenstrom der Pumpe 14a mittels eines Phasenanschnitts, einer Pulsweitenmodulation, einer Amplitudenanpassung und/oder einer Frequenzanpassung einer Stromzufuhr für die Pumpe 14a einzustellen. In einem Betriebsmodus stellt die Steuer- und Regeleinheit 18a den Volumenstrom der Pumpe 14a mittels eines Phasenanschnitts einer Stromzufuhr für die Pumpe 14a ein. Der Mikrochip der Steuer- und Regeleinheit 18a ist dazu vorgesehen, den Phasenanschnitt einzustellen. In einem weiteren Betriebsmodus stellt die Steuer- und Regeleinheit 18a den Volumenstrom der Pumpe 14a mittels einer Pulsweitenmodulation einer Stromzufuhr für die Pumpe 14a ein. Der Mikrochip der Steuer- und Regeleinheit 18a ist dazu vorgesehen, die Pulsweitenmodulation einzustellen. In einem weiteren Betriebsmodus stellt die Steuer- und Regeleinheit 18a den Volumenstrom der Pumpe 14a mittels einer Amplitudenanpassung einer Stromzufuhr für die Pumpe 14a ein. Der Mikrochip der Steuer- und Regeleinheit 18a ist dazu vorgesehen, die Amplitude der Stromzufuhr einzustellen. In einem weiteren Betriebsmodus stellt die Steuer- und Regeleinheit 18a den Volumenstrom der Pumpe 14a mittels einer Frequenzanpassung einer Stromzufuhr für die Pumpe 14a ein. Der Mikrochip der Steuer- und Regeleinheit 18a ist dazu vorgesehen, die Frequenz der Stromzufuhr einzustellen.

Die Steuer- und Regeleinheit 18a ist dazu vorgesehen, den Volumenstrom der Pumpe 14a in Abhängigkeit von einer Getränkeart und in Abhängigkeit von einer Getränkevariante einzustellen. In einem Betriebsmodus übermittelt die Bedieneinheit 28a eine gewünschte Getränkeart und eine Getränkevariante an die Steuer- und Regeleinheit 18a. Die Steuer- und Regeleinheit 18a wählt ein Abhängigkeit von der gewünschten Getränkeart und in Abhängigkeit von der gewünschten Getränkevariante einen Sollwert des Volumenstroms aus einem Satz von vorgegebenen Sollwerten für die Ausgabe einer Flüssigkeitsportion aus und regelt den Volumenstrom auf den ausgewählten Sollwert.

Bei einem Verfahren zur Steuerung des Getränkeautomaten 12a, stellt die Steuer- und Regeleinheit 18a einen Pumpenparameter abhängig von zumindest einer Kenngröße ein.

In einem ersten Konfigurationsschritt startet die Steuer- und Regeleinheit 18a die Pumpe 14a zur Ausgabe einer Flüssigkeitsportion bei einem Druck, der einem mittleren Druck des Arbeitsdruckbereichs der Pumpe 14a entspricht, und speist die Pumpe 14a mit einer maximalen für die Pumpe 14a vorgesehenen elektrischen Leistung. Die Steuer- und Regeleinheit 18a ermittelt den von der Pumpe 14a bei der Ausgabe erzeugten Volumenstrom. Die Steuer- und Regeleinheit 18a speichert einen Sollwert, der in dem vorliegenden Ausführungsbeispiel 90% des in dem Konfigurationsschritt erzeugten maximalen Volumenstroms entspricht. Es ist auch denkbar dass der Sollwert 85% oder 80% des maximalen Volumenstroms entspricht. In einem alternativen Konfigurationsschritt kann der Sollwert des Volumenstroms frei eingestellt werden. Es können auch unterschiedliche Sollwerte für verschiedene Getränkearten eingestellt werden.

Bei einer von einem Benutzer angeforderten Getränkeausgabe, ermittelt die Steuer- und Regeleinheit 18a in einem ersten Betriebsmodus aufgrund eines Signals des Durchflussmessers 80a den Volumenstrom und regelt den Volumenstrom auf den Sollwert ein.

In einem weiteren Betriebsmodus oder in einer alternativen Ausgestaltung ermittelt die Steuer- und Regeleinheit 18a aufgrund eines Signals der Widerstandsmesseinheit 86a einen elektrischen Widerstand der Magnetspule 16a und regelt die elektrische Leistungszufuhr der Pumpe 14a in Abhängigkeit von dem ermittelten elektrischen Widerstand. Die Steuer- und Regeleinheit 18a speichert Regelkurven, die eine Leistungszufuhr der Pumpe 14a in Abhängigkeit von dem ermittelten elektrischen Widerstand festlegen. Bei einem geringen elektrischen Widerstand stellt die Steuer- und Regeleinheit 18a eine Leistungszufuhr auf einen Wert ein, der kleiner 10 als der Maximalwert der Leistungszufuhr ist. Eine Erwärmung der Magnetspule 16a und ein damit verbundener Leistungsabfall wird begrenzt. Bei steigendem Widerstand steigert die Steuer- und Regeleinheit 18a die Leistungszufuhr der Pumpe 14a. Bei einer Pause zwischen Getränkeausgaben kühlt die Magnetspule 16a wieder ab und bei einer weiteren Getränkeausgabe stellt die Steuer- und Regeleinheit 18a die Leistungszufuhr wieder auf einen kleineren Wert ein.

In einem weiteren Betriebsmodus oder in einer alternativen Ausgestaltung ermittelt die Steuer- und Regeleinheit 18a aufgrund eines Signals des Temperatursensors 24a eine Temperatur der Magnetspule 16a und regelt die elektrische Leistungszufuhr der Pumpe 14a in Abhängigkeit von der ermittelten Temperatur analog zu dem vorhergehend beschriebenen Betriebsmodus.

Die Steuer- und Regeleinheit 18a regelt die Leistungszufuhr der Pumpe 14a mittels Phasenanschnitts, einer Pulsweitenmodulation, einer Amplitudenanpassung und/oder einer Frequenzanpassung der Stromzufuhr für die Pumpe 14a.

In den Figuren 4 bis 7 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 7 ist der Buchstabe a durch die Buchstaben b bis d ersetzt.

Figur 4 zeigt ein weiteres Ausführungsbeispiel einer Pumpvorrichtung 10b. Die Pumpvorrichtung 10b ist mittels einer Flüssigkeitsleitung 36b mit einem Vorratsbehälter 26b für Wasser eines nicht näher dargestellten Getränkeautomaten verbunden. Die Pumpvorrichtung 10b weist im Unterschied zu dem vorangehenden Ausführungsbeispiel eine Pumpe 14b auf, die als eine Mitteldruckpumpe ausgebildet ist. Die Pumpe 14b weist einen Arbeitsdruckbereich auf, der Werte von einschließlich 3 bar bis 8 bar umfasst. Die Pumpvorrichtung 10b umfasst analog zu dem vorangehenden Ausführungsbeispiel eine Steuer- und Regeleinheit 18b, die dazu vorgesehen ist, zumindest einen Pumpenparameter abhängig von zumindest einer Kenngröße einzustellen. Die Steuer- und Regeleinheit 18b umfasst eine nicht näher dargestellte Steuer- und Regelelektronik mit einer Prozessoreinheit und mit einer Speichereinheit. In dem vorliegenden Ausführungsbeispiel umfasst die Steuer- und Regelelektronik einen Mikrochip. Die Steuer- und Regeleinheit 18b weist eine Eingabeschnittstelle 84b auf. Die Pumpvorrichtung 10b weist eine Mehrzahl von Betriebsmodi zum Betrieb der Steuer- und Regeleinheit 18b auf. Die Pumpe 14b weist einen Maximalwert des Volumenstroms auf, der dem Volumenstrom entspricht, den die Pumpe 14b bei einer Temperatur von 20 Grad Celsius bei ungeregeltem Betrieb mit der Nennspannung von 230 V fördert.

Die Pumpvorrichtung 10b weist analog zu dem vorangehenden Ausführungsbeispiel einen Durchflussmesser 80b zur Erfassung des Volumenstroms der Pumpe 14b auf. Der Durchflussmesser 80b ist in dem vorliegenden Ausführungsbeispiel als ein Flügelradzähler ausgebildet. Die Pumpvorrichtung 10b weist eine signaltechnische Verbindung 82b zwischen dem Durchflussmesser 80b und der Steuer- und Regeleinheit 18b auf. Die signaltechnische Verbindung 82b ist als eine Signalleitung ausgebildet. Die Steuer- und Regeleinheit 18b ist dazu vorgesehen, in einem Betriebsmodus den Maximalwert des Volumenstroms zu bestimmen. Die Steuer- und Regeleinheit 18b ist dazu vorgesehen, den Maximalwert des Volumenstroms zu speichern. In einem weiteren Betriebsmodus kann der der Maximalwert des Volumenstroms in die Steuer- und Regeleinheit 18b über die Eingabeschnittstelle 84b eingegeben und von der Steuer- und Regeleinheit 18b gespeichert werden. Die Steuer- und Regeleinheit 18b ist dazu vorgesehen, als Pumpenparameter einen Volumenstrom bei einem Druck in dem Arbeitsdruckbereich der Pumpe 14b auf einen Sollwert von weniger als 90% des Maximalwerts des Volumenstroms einzustellen.

Die Pumpvorrichtung 10b weist analog zu dem vorangehenden Ausführungsbeispiel eine Widerstandsmesseinheit 86b und eine signaltechnische Verbindung 88b zwischen der Widerstandsmesseinheit 86b und der Steuer- und Regeleinheit 18b auf. Die Pumpvorrichtung 10b weist ferner analog zu dem vorangehenden Ausführungsbeispiel einen Temperatursensor 24b und eine signaltechnische Verbindung 90b zwischen dem Temperatursensor 24b und der Steuer- und Regeleinheit 18b auf.

Die Pumpe 14b umfasst eine Magnetspule 16b. Die Magnetspule 16b weist analog zu dem vorangehenden Ausführungsbeispiel einen Spulendraht 22b auf, der in einer Mehrzahl von Windungen 20b angeordnet ist. In dem vorliegenden Ausführungsbeispiel weist die Spulendrahtmasse einen Wert von etwa 80 g auf. Der Spulendraht 22b ist als ein Kupferdraht ausgebildet. In dem vorliegenden Ausführungsbeispiel weist die Pumpe 14b eine maximale hydraulische Leistung von etwa 4,0 W auf. Die Pumpe weist ein Verhältnis von Spulendrahtmasse zu maximaler hydraulischer Leistung von etwa 20 g/W auf.

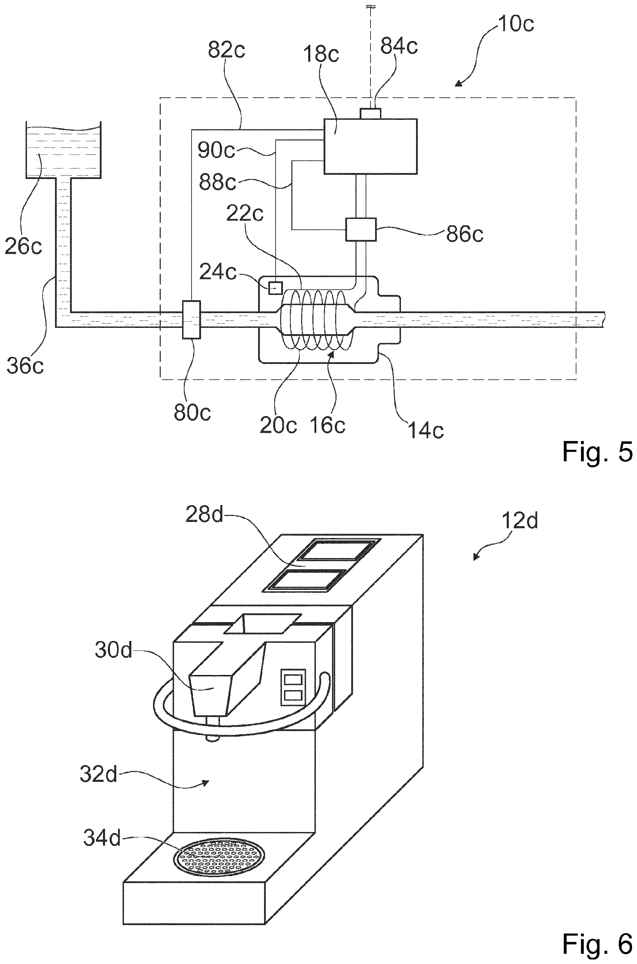

Figur 5 zeigt ein weiteres Ausführungsbeispiel einer Pumpvorrichtung 10c. Die Pumpvorrichtung ist mittels einer Flüssigkeitsleitung 36c mit einem Vorratsbehälter 26c für Wasser eines nicht näher dargestellten Getränkeautomaten verbunden. Die Pumpvorrichtung 10c weist im Unterschied zu den vorangehenden Ausführungsbeispielen eine Pumpe 14c auf, die als eine Niederdruckpumpe ausgebildet ist. Die Pumpe 14c weist einen Arbeitsdruckbereich auf, der Werte von einschließlich 0,5 bar bis 3 bar umfasst. Die Pumpvorrichtung 10c umfasst analog zu den vorangehenden Ausführungsbeispielen eine Steuer- und Regeleinheit 18c, die dazu vorgesehen ist, zumindest einen Pumpenparameter abhängig von zumindest einer Kenngröße einzustellen. Die Steuer- und Regeleinheit 18c umfasst eine nicht näher dargestellte Steuer- und Regelelektronik mit einer Prozessoreinheit und mit einer Speichereinheit. In dem vorliegenden Ausführungsbeispiel umfasst die Steuer- und Regelelektronik einen Mikrochip. Die Steuer- und Regeleinheit 18c weist eine Eingabeschnittstelle 84c auf. Die Pumpvorrichtung 10c weist eine Mehrzahl von Betriebsmodi zum Betrieb der Steuer- und Regeleinheit 18c auf. Die Pumpe 14c weist einen Maximalwert des Volumenstroms auf, der dem Volumenstrom entspricht, den die Pumpe 14c bei einer Temperatur von 20 Grad Celsius bei ungeregeltem Betrieb mit der Nennspannung von 230 V fördert.

Die Pumpvorrichtung 10c weist analog zu dem vorangehenden Ausführungsbeispiel einen Durchflussmesser 80c zur Erfassung des Volumenstroms der Pumpe 14c auf. Der Durchflussmesser 80c ist in dem vorliegenden Ausführungsbeispiel als ein Flügelradzähler ausgebildet. Die Pumpvorrichtung 10c weist eine signaltechnische Verbindung 82c zwischen dem Durchflussmesser 80c und der Steuer- und Regeleinheit 18c auf. Die signaltechnische Verbindung 82c ist als eine Signalleitung ausgebildet. Die Steuer- und Regeleinheit 18c ist dazu vorgesehen, in einem Betriebsmodus den Maximalwert des Volumenstroms zu bestimmen. Die Steuer- und Regeleinheit 18c ist dazu vorgesehen, den Maximalwert des Volumenstroms zu speichern. In einem weiteren Betriebsmodus kann der der Maximalwert des Volumenstroms in die Steuer- und Regeleinheit 18c über die Eingabeschnittstelle 84c eingegeben und von der Steuer- und Regeleinheit 18c gespeichert werden. Die Steuer- und Regeleinheit 18c ist dazu vorgesehen, als Pumpenparameter einen Volumenstrom bei einem Druck in dem Arbeitsdruckbereich der Pumpe 14c auf einen Sollwert von weniger als 90% des Maximalwerts des Volumenstroms einzustellen.

Die Pumpvorrichtung 10c weist analog zu dem vorangehenden Ausführungsbeispiel eine Widerstandsmesseinheit 86c und eine signaltechnische Verbindung 88c zwischen der Widerstandsmesseinheit 86c und der Steuer- und Regeleinheit 18c auf. Die Pumpvorrichtung 10c weist ferner analog zu dem vorangehenden Ausführungsbeispiel einen Temperatursensor 24c und eine signaltechnische Verbindung 90c zwischen dem Temperatursensor 24c und der Steuer- und Regeleinheit 18c auf.

Die Pumpe 14c umfasst eine Magnetspule 16c. Die Magnetspule 16c weist analog zu dem vorangehenden Ausführungsbeispielen einen Spulendraht 22c auf, der in einer Mehrzahl von Windungen 20c angeordnet ist. In dem vorliegenden Ausführungsbeispiel weist die Spulendrahtmasse einen Wert von etwa 40 g auf. Der Spulendraht 22c ist als ein Kupferdraht ausgebildet. In dem vorliegenden Ausführungsbeispiel weist die Pumpe 14c eine maximale hydraulische Leistung von etwa 0,75 W auf. Die Pumpe weist ein Verhältnis von Spulendrahtmasse zu maximaler hydraulischer Leistung von etwa 53,3 g/W auf.

Figur 6 zeigt einen Getränkeautomaten 12d mit einer Pumpvorrichtung 10d eines weiteren Ausführungsbeispiels. Der Getränkeautomat ist im Unterschied zu den vorangehenden Ausführungsbeispielen als ein Kapselautomat ausgebildet. Der Getränkeautomat 12d weist eine Kapselaufnahme für eine mit gemahlenem Kaffee oder einem Getränkepulver gefüllte Kapsel auf. Der Getränkeautomat 12d ist dazu vorgesehen, Wasser unter Druck in die Kapsel zu pressen und beispielsweise Kaffee zu brühen. In dem vorliegenden Ausführungsbeispiel ist der Getränkeautomat 12d zum Einsatz in einem Haushalt vorgesehen. Der Getränkeautomat 12d ist je nach eingelegter Kapsel für die Ausgabe von Getränkevarianten vorgesehen, wie beispielsweise Kaffee, Espresso, Ristretto und Lungo.

Der Getränkeautomat 12d umfasst einen Vorratsbehälter 26d für Wasser. Der Getränkeautomat 12d umfasst ferner eine Bedieneinheit 28d, eine Ausgabeeinheit 30d, und eine Gefäßaufnahme 32d. Die Gefäßaufnahme 32d weist einen Abstellrost 34d auf. Der Getränkeautomat 12d umfasst ferner eine nicht näher dargestellte Heizeinheit.

Der Getränkeautomat 12d ist dazu vorgesehen, die Getränke portionsweise auszugeben. Der Getränkeautomat 12d ist dazu vorgesehen, bei einer Ausgabe eine Flüssigkeitsportion in Abhängigkeit von einer Getränkeart und in Abhängigkeit von einer Getränkevariante auszugeben. Eine Flüssigkeitsportion weist in dem vorliegenden Ausführungsbeispiel einen Wert zwischen 20 ml und 400 ml auf.

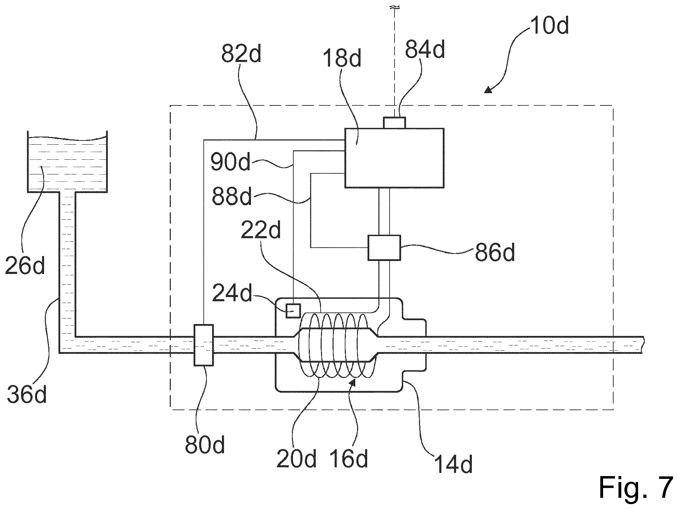

Die Pumpvorrichtung 10d weist eine Pumpe 14d auf, die als eine Hochdruckpumpe ausgebildet ist. Die Pumpe 14d umfasst eine Magnetspule 16d. Die Magnetspule 16d weist einen Spulendraht 22d auf, der in einer Mehrzahl von Windungen 20d angeordnet ist. Der Getränkeautomat 12d weist eine Flüssigkeitsleitung 36d auf, die den Vorratsbehälter 26d für Wasser mit der Pumpe 14d verbindet. Die Pumpvorrichtung 10d umfasst analog zu den vorhergehenden Ausführungsbeispielen eine Steuer- und Regeleinheit 18d, die dazu vorgesehen ist, zumindest einen Pumpenparameter abhängig von zumindest einer Kenngröße einzustellen (vgl. Figur 7). Die Steuer- und Regeleinheit 18d weist eine Eingabeschnittstelle 84d auf. Die Pumpvorrichtung 10d weist eine Mehrzahl von Betriebsmodi zum Betrieb der Steuer- und Regeleinheit 18d auf. Die Pumpe 14d weist einen Maximalwert des Volumenstroms auf, der dem Volumenstrom entspricht, den die Pumpe 14d bei einer Temperatur von 20 Grad Celsius bei ungeregeltem Betrieb mit der Nennspannung von 230 V fördert.

Die Pumpvorrichtung 10d weist einen Durchflussmesser 80d zur Erfassung des Volumenstroms der Pumpe 14d auf. Der Durchflussmesser 80d ist in dem vorliegenden Ausführungsbeispiel als ein Flügelradzähler ausgebildet. Die Pumpvorrichtung 10d weist eine signaltechnische Verbindung 82d zwischen dem Durchflussmesser 80d und der Steuer- und Regeleinheit 18d auf. Die signaltechnische Verbindung 82d ist als eine Signalleitung ausgebildet. Die Steuer- und Regeleinheit 18d ist dazu vorgesehen, in einem Betriebsmodus den Maximalwert des Volumenstroms zu bestimmen. In einem weiteren Betriebsmodus kann der der Maximalwert des Volumenstroms in die Steuer- und Regeleinheit 18d über die Eingabeschnittstelle 84d eingegeben und von der Steuer- und Regeleinheit 18d gespeichert werden. Die Steuer- und Regeleinheit 18d ist dazu vorgesehen, als Pumpenparameter einen Volumenstrom bei einem Druck in dem Arbeitsdruckbereich der Pumpe 14d auf einen Sollwert von weniger als 90% des Maximalwerts des Volumenstroms einzustellen.

Analog zu den vorhergehenden Ausführungsbeispielen umfasst die Pumpvorrichtung einen Temperatursensor 24d, der dazu vorgesehen ist, eine Temperatur der Magnetspule 16d zu erfassen. Der Temperatursensor 24d ist dazu vorgesehen, eine erfasste Temperatur mittels einer signaltechnischen Verbindung 90d an die Steuer- und Regeleinheit 18d zu übermitteln. Die Pumpvorrichtung umfasst ferner eine Widerstandsmesseinheit 86d, die dazu vorgesehen ist, einen elektrischen Widerstand der Pumpe 14d zu erfassen und mittels einer signaltechnischen Verbindung 88d an die Steuer- und Regeleinheit 18d zu übermitteln.

### Bezugszeichen

- 10: Pumpvorrichtung
- 12: Getränkeautomat
- 14: Pumpe
- 16: Magnetspule
- 18: Steuer- und/oder Regeleinheit
- 20: Windung
- 22: Spulendraht
- 24: Temperatursensor
- 26: Vorratsbehälter
- 28: Bedieneinheit
- 30: Ausgabeeinheit
- 32: Gefäßaufnahme
- 34: Abstellrost
- 36: Flüssigkeitsleitung
- 38: Pumpraumwandung
- 40: Pumpeninnenraum
- 42: Längsachse
- 44: Magnetaktor
- 46: Spulengehäuse
- 48: Kolbenelement
- 50: Kastenjoch
- 52: Polschuhelement
- 54: Polschuhelement
- 56: Spalt
- 58: Pumpfeder
- 60: Dämpfungsfeder
- 62: Gehäuseelement
- 64: Anschlussstutzen
- 66: Gehäuseelement
- 68: Druckkammerzylinder
- 70: Druckkammer
- 72: Vorkammer
- 74: Auslassventil
- 76: Kolbenventil
- 78: Flussleitelement
- 80: Durchflussmesser
- 82: Verbindung
- 84: Eingabeschnittstelle
- 86: Widerstandsmesseinheit
- 88: Verbindung
- 90: Verbindung

## Patentansprüche

1. Pumpvorrichtung für eine Haushaltsmaschine, insbesondere für einen Getränkeautomaten (12a), mit einer Pumpe (14a; 14b; 14c), die zumindest eine Magnetspule (16a; 16b; 16c) aufweist, und mit einer Steuer- und/oder Regeleinheit (18a; 18b; 18c), wobei die Steuer- und/oder Regeleinheit (18a; 18b; 18c) dazu vorgesehen ist, zumindest einen Pumpenparameter, welcher ein Volumenstrom für einen gegebenen Druck ist, abhängig von zumindest einer Kenngröße einzustellen, wobei die Steuer- und/oder Regeleinheit (18a; 18b; 18c) dazu vorgesehen ist, den Volumenstrom der Pumpe (14a; 14b; 14c) mittels eines Phasenanschnitts, einer Pulsweitenmodulation, einer Amplitudenanpassung und/oder einer Frequenzanpassung einer Stromzufuhr für die Pumpe (14a; 14b; 14c) einzustellen, **dadurch gekennzeichnet, dass** die Steuer- und/oder Regeleinheit dazu vorgesehen ist, bei sonst gleichen Anforderungen den Volumenstrom bei und/oder zwischen Ausgaben einer Flüssigkeitsportion konstant zu halten.

2. Pumpvorrichtung nach Anspruch 1, **dadurch gekennzeichnet, dass** die Pumpe (14a; 14b; 14c) einen Arbeitsdruckbereich aufweist und die Steuer- und/oder Regeleinheit (18a; 18b; 18c) dazu vorgesehen ist, als Pumpenparameter einen Volumenstrom bei einem Druck in dem Arbeitsdruckbereich der Pumpe (14a; 14b; 14c) auf einen Sollwert von weniger als 90% eines Maximalwerts einzustellen, den die Pumpe (14a; 14b; 14c) bei einem Druck in dem Arbeitsdruckbereich für eine Temperatur der Magnetspule (16a; 16b; 16c) von 20 Grad Celsius bei ungeregeltem Betrieb mit Nennspannung fördert.

3. Pumpvorrichtung nach einem der vorhergehenden Ansprüche, **dadurch gekennzeichnet, dass** die Pumpe (14c) als eine Niederdruckpumpe ausgebildet ist und die Magnetspule (16c) der Pumpe (14c) eine Spulendrahtmasse aufweist, die einen Wert von weniger als 60 g aufweist oder die Pumpe (14b) als eine Mitteldruckpumpe ausgebildet ist und die Magnetspule (16b) der Pumpe (14b) eine Spulendrahtmasse aufweist, die einen Wert von weniger als 150 g aufweist oder die Pumpe (14a) als eine Hochdruckpumpe ausgebildet ist und die Magnetspule (16a) der Pumpe (14a) eine Spulendrahtmasse aufweist, die einen Wert von weniger als 160 g aufweist.

4. Pumpvorrichtung nach einem der vorhergehenden Ansprüche, **dadurch gekennzeichnet, dass** die Pumpe (14c) als eine Niederdruckpumpe ausgebildet ist, die Pumpe (14c) eine maximale hydraulische Leistung aufweist, die Magnetspule (16c) der Pumpe (14c) eine Spulendrahtmasse aufweist und ein Verhältnis von Spulendrahtmasse zu maximaler hydraulischer Leistung weniger als 80 g/W beträgt oder die Pumpe (14b) als eine Mitteldruckpumpe ausgebildet ist, die Pumpe (14b) eine maximale hydraulische Leistung aufweist, die Magnetspule (16b) der Pumpe (14b) eine Spulendrahtmasse aufweist und ein Verhältnis von Spulendrahtmasse zu maximaler hydraulischer Leistung weniger als 40 g/W beträgt oder die Pumpe (14a) als eine Hochdruckpumpe ausgebildet ist, die Pumpe eine maximale hydraulische Leistung aufweist, die Magnetspule (16a) der Pumpe (16a) eine Spulendrahtmasse aufweist und ein Verhältnis von Spulendrahtmasse zu maximaler hydraulischer Leistung weniger als 37 g/W beträgt.

5. Pumpvorrichtung nach einem der vorhergehenden Ansprüche, **dadurch gekennzeichnet, dass** die Pumpe (14a) dazu vorgesehen ist, mit einer Wechselspannung von etwa 230 V betrieben zu werden, und die Magnetspule (16a) der Pumpe (14a) höchstens 3800 Windungen (20a) aufweist oder die Pumpe (14a) dazu vorgesehen ist, mit einer Wechselspannung von 127 V oder weniger betrieben zu werden, und die Magnetspule (16a) der Pumpe (14a) höchstens 2100 Windungen (20a) aufweist.

6. Pumpvorrichtung nach einem der vorhergehenden Ansprüche, **dadurch gekennzeichnet, dass** die Pumpe (14a) dazu vorgesehen ist, mit einer Wechselspannung von etwa 230 V betrieben zu werden, und die Magnetspule (16a) der Pumpe (14a) einen Spulendraht (22a) aufweist, der einen Durchmesser von weniger als 0,21 mm aufweist, oder die Pumpe dazu vorgesehen ist, mit einer Wechselspannung von 127 V oder weniger betrieben zu werden, und die Magnetspule (16a) der Pumpe (14a) einen Spulendraht (22a) aufweist, der einen Durchmesser von weniger als 0,38 mm aufweist.

7. Pumpvorrichtung nach Anspruch 2, **dadurch gekennzeichnet, dass** die Steuer- und/oder Regeleinheit (18a; 18b; 18c) dazu vorgesehen ist, die Pumpe (14a; 14b; 14c) in Abhängigkeit von einer Veränderung des elektrischen Widerstands der Magnetspule (18a; 18b; 18c) zu regeln.

8. Pumpvorrichtung nach Anspruch 2, **gekennzeichnet durch** einen signaltechnisch mit der Steuer- und/oder Regeleinheit (18a; 18b; 18c) verbundenen Temperatursensor (24a; 24b; 24c), der dazu vorgesehen ist, eine Temperatur der Magnetspule (18a; 18b; 18c) zu erfassen.

9. Pumpvorrichtung nach Anspruch 8, **dadurch gekennzeichnet, dass** die Steuer- und/oder Regeleinheit (18a; 18b; 18c) dazu vorgesehen ist, einen Volumenstrom der Pumpe (14a; 14b; 14c) in Abhängigkeit von der von dem Temperatursensor (24a; 24b; 24c) erfassten Temperatur einzustellen.

10. Pumpvorrichtung nach einem der vorhergehenden Ansprüche, **dadurch gekennzeichnet, dass** die Steuer- und/oder Regeleinheit (18a; 18b; 18c) dazu vorgesehen ist, einen Volumenstrom der Pumpe (14a; 14b; 14c) in Abhängigkeit von einer Getränkeart und/oder in Abhängigkeit von einer Getränkevariante einzustellen.

11. Getränkeautomat mit einer Pumpvorrichtung (10a; 10b; 10c) nach einem der vorhergehenden Ansprüche.

12. Verfahren zur Steuerung einer Haushaltsmaschine, insbesondere zur Steuerung eines Getränkeautomaten (12a), mit einer Pumpe (14a; 14b; 14c), die zumindest eine Magnetspule (16a; 16b; 16c) aufweist, und mit einer Steuer- und/oder Regeleinheit (18a; 18b; 18c), wobei die Steuer- und/oder Regeleinheit (18a; 18b; 18c) zumindest einen Pumpenparameter, welcher ein Volumenstrom für einen gegebenen Druck ist, abhängig von zumindest einer Kenngröße einstellt, wobei die Steuer- und/oder Regeleinheit (18a; 18b; 18c) den Volumenstrom der Pumpe (14a; 14b; 14c) mittels eines Phasenanschnitts, einer Pulsweitenmodulation, einer Amplitudenanpassung und/oder einer Frequenzanpassung einer Stromzufuhr für die Pumpe (14a; 14b; 14c) einstellt, **dadurch gekennzeichnet, dass** die Steuer- und/oder Regeleinheit bei sonst gleichen Anforderungen den Volumenstrom bei und/oder zwischen Ausgaben einer Flüssigkeitsportion konstant hält.

## Claims

1. Pump device for a household appliance, in particular for a beverage dispensing machine (12a),
with a pump (14a; 14b; 14c) comprising at least one magnetic coil (16a; 16b; 16c),
and with a control and/or regulation unit (18a; 18b; 18c),
wherein the control and/or regulation unit (18a; 18b; 18c) is configured to adjust at least one pump parameter, which is a volume flow for a given pressure, as a function of at least one characteristic,
wherein the control and/or regulation unit (18a; 18b; 18c) is configured to adjust the volume flow of the pump (14a; 14b; 14c) on the basis of a phase cutting, a pulse width modulation, an amplitude adaption and/or a frequency adaption of a power supply for the pump (14a; 14b; 14c),
**characterised in that** the control and/or regulation unit is configured, under otherwise identical conditions, to keep the volume flow constant during and/or between discharges of a liquid portion.

2. Pump device according to claim 1,
**characterised in that** the pump (14a; 14b; 14c) comprises a work pressure range and the control and/or regulation unit (18a; 18b; 18c) is configured, in case of a pressure being in the work pressure range of the pump (14a; 14b; 14c), to adjust a volume flow as a pump parameter to a nominal value of less than 90 % of a maximum value conveyed by the pump (14a; 14b; 14c) if a pressure is in the work pressure range, in a non-regulated operation with a nominal voltage, for a temperature of the magnetic coil (16a; 16b; 16c) of 20°C..

3. Pump device according to one of the preceding claims,
**characterised in that** the pump (14c) is embodied as a low-pressure pump and the magnetic coil (16c) of the pump (14c) has a coil wire mass with a value of less than 60 g,
or the pump (14b) is embodied as a medium-pressure pump and the magnetic coil (16b) of the pump (14b) has a coil wire mass with a value of less than 150 g, or the pump (14a) is embodied as a high-pressure pump (14a) and the magnetic coil (16a) of the pump (14a) has a coil wire mass with a value of less than 160 g.

4. Pump device according to one of the preceding claims,
**characterised in that** the pump (14c) is embodied as a low-pressure pump, the pump (14c) has a maximum hydraulic power, the magnetic coil (16c) of the pump (14c) has a coil wire mass and a ratio of coil wire mass to maximum hydraulic power is less than 80 g/W,
or the pump (14b) is embodied as a medium-pressure pump, the pump (14b) has a maximum hydraulic power, the magnetic coil (16b) of the pump (14b) has a coil wire mass and a ratio of coil wire mass to maximum hydraulic power is less than 40 g/W,
or the pump (14a) is embodied as a high-pressure pump, the pump (14a) has a maximum hydraulic power, the magnetic coil (16a) of the pump (14a) has a coil wire mass and a ratio of coil wire mass to maximum hydraulic power is less than 37 g/W.

5. Pump device according to one of the preceding claims,
**characterised in that** the pump (14a) is configured to be operated at an alternating voltage of approximately 230 V and the magnetic coil (16a) of the pump (14a) comprises maximally 3800 windings (20a),
or the pump (14a) is configured to be operated at an alternating voltage that is equal to or less than 127 V and the magnetic coil (16a) of the pump (14a) comprises maximally 2100 windings (20a).

6. Pump device according to one of the preceding claims,
**characterised in that** the pump (14a) is configured to be operated at an alternating voltage of approximately 230 V and the magnetic coil (16a) of the pump (14a) comprises a coil wire (22a) having a diameter of less than 0.21 mm,
or the pump (14a) is configured to be operated at an alternating voltage that is equal to or less than 127 V and the magnetic coil (16a) of the pump (14a) comprises a coil wire (22a) having a diameter of less than 0.38 mm.

7. Pump device according to claim 2,
**characterised in that** the control and/or regulation unit (18a; 18b; 18c) is configured to regulate the pump (14a; 14b; 14c) as a function of a change in the electrical resistance of the magnetic coil (16a; 16b; 16c).

8. Pump device according to claim 2,
**characterised by** a temperature sensor (24a; 24b; 24c) that is connected to the control and/or regulation unit (18a; 18b; 18c) in terms of signal technology and is configured to capture a temperature of the magnetic coil (16a; 16b; 16c).

9. Pump device according to claim 8,
**characterised in that** the control and/or regulation unit (18a; 18b; 18c) is configured to adjust a volume flow of the pump (14a; 14b; 14c) as a function of the temperature captured by the temperature sensor (24a; 24b; 24c).

10. Pump device according to one of the preceding claims,
**characterised in that** the control and/or regulation unit (18a; 18b; 18c) is configured to adjust a volume flow of the pump (14a; 14b; 14c) as a function of a beverage type and/or as a function of a beverage variety.

11. Beverage dispensing machine with a pump device according to one of the preceding claims.

12. Method for a controlling of a household appliance, in particular for a controlling of a beverage dispensing machine (12a),
with a pump (14a; 14b; 14c) comprising at least one magnetic coil (16a; 16b; 16c),
and with a control and/or regulation unit (18a; 18b; 18c),
wherein the control and/or regulation unit (18a; 18b; 18c) is configured to adjust at least one pump parameter, which is a volume flow for a given pressure, as a function of at least one characteristic,
wherein the control and/or regulation unit (18a; 18b; 18c) is configured to adjust the volume flow of the pump (14a; 14b; 14c) on the basis of a phase cutting, a pulse width modulation, an amplitude adaption and/or a frequency adaption of a power supply for the pump (14a; 14b; 14c),
**characterised in that** the control and/or regulation unit is configured, under otherwise identical conditions, to keep the volume flow constant during and/or between discharges of a liquid portion.

## Revendications

1. Dispositif de pompe pour un appareil ménager, en particulier pour in distributeur de boissons (12a),
avec une pompe (14a ; 14b ; 14c) comprenant au moins une bobine électroaimant (16a ; 16b ; 16c),
et avec une unité de commande et/ou régulation (18a ; 18b ; 18c),
où l'unité de commande et/ou régulation (18a ; 18b ; 18c) est prévue pour ajuster, en fonction d'au moins une caractéristique, au moins un paramètre de pompe, qui est un débit volumétrique pour une pression donnée,
où l'unité de commande et/ou régulation (18a ; 18b ; 18c) est prévue pour ajuster le débit volumétrique de la pompe (14a ; 14b ; 14c) à l'aide d'une coupure de phase ascendante, d'une modulation de largeur d'impulsions, d'une adaptation d'amplitude et/ou d'une adaptation de fréquence d'une alimentation électrique pour la pompe (14a ; 14b ; 14b),
**caractérisé en ce que** l'unité de commande et/ou régulation est prévue, en exigences autrement égales, à maintenir le débit volumétrique constant pendant et/ou entre des déchargements d'une portion de liquide.

2. Dispositif de pompe selon la revendication 1,
**caractérisé en ce que** la pompe (14a ; 14b ; 14c) comporte une gamme de pression de fonctionnement
et l'unité de commande et/ou régulation (18a ; 18b ; 18c) est prévue, si une pression est dans la gamme de pression de fonctionnement de la pompe (14a ; 14b ; 14c), pour ajuster un débit volumétrique comme paramètre de pompe de telle manière qu'on obtient une valeur nominale inférieure à 90 % d'une valeur maximale convoyée par la pompe (14a ; 14b ; 14c) si une pression est dans la gamme de pression de fonctionnement, avec une opération non-régulée sous voltage nominale pour une température de la bobine électroaimant (16a ; 16b ; 16c) de 20°C.

3. Dispositif de pompe selon l'une quelconque des revendications précédentes,
**caractérisé en ce que** la pompe (14c) est réalisée comme une pompe à basse pression et la bobine électroaimant (16c) de la pompe (14c) présente une masse de fil de bobinage ayant une valeur inférieure à 60 g,
ou la pompe (14b) est réalisée comme une pompe à pression moyenne et la bobine électroaimant (16b) de la pompe (14b) présente une masse de fil de bobinage ayant une valeur inférieure à 150g,
ou la pompe (14a) est réalisée comme une pompe à haute pression et la bobine électroaimant (16a) de la pompe (14a) présente une masse de fil de bobinage ayant une valeur inférieure à 160 g.

4. Dispositif de pompe selon l'une quelconque des revendications précédentes,
**caractérisé en ce que** la pompe (14c) est réalisée comme une pompe à basse pression, la pompe (14c) présente une puissance hydraulique maximale, la bobine électroaimant (16c) de la pompe (14c) présente une masse de fil de bobinage et un ratio de la masse de fil de bobinage à la puissance hydraulique maximale est inférieur à 80 g/W,
ou la pompe (14b) est réalisée comme une pompe à pression moyenne, la pompe (14b) présente une puissance hydraulique maximale, la bobine électroaimant (16b) de la pompe (14b) présente une masse de fil de bobinage et un ratio de la masse de fil de bobinage à la puissance hydraulique maximale est inférieur à 40 g/W,
ou la pompe (14a) est réalisée comme une pompe à haute pression, la pompe présente une puissance hydraulique maximale, la bobine électroaimant (16a) de la pompe (14a) présente une masse de fil de bobinage et un ratio de la masse de fil de bobinage à la puissance hydraulique maximale est inférieur à 37 g/W.

5. Dispositif de pompe selon l'une quelconque des revendications précédentes,
**caractérisé en ce que** la pompe (14a) est prévue à être opérée avec une tension alternative d'environ 230 V et la bobine électroaimant (16a) de la pompe (14a) comprend maximalement 3800 spires (20a)
ou la pompe (14a) est prévue à être opérée avec une tension alternative qui est égale ou inférieure à 127 V et la bobine électroaimant (16a) de la pompe (14a) comprend maximalement 2100 spires (20a).

6. Dispositif de pompe selon l'une quelconque des revendications précédentes,
**caractérisé en ce que** la pompe (14a) est prévue à être opérée avec une tension alternative d'environ 230 V et la bobine électroaimant (16a) de la pompe (14a) comporte un fil de bobinage (22a) ayant un diamètre inférieur à 0.21 mm, ou la pompe est prévue à être opérée avec une tension alternative qui est égale ou inférieure à 127 V et la bobine électroaimant (16a) de la pompe (14a) comporte un fil de bobinage (22a) ayant un diamètre inférieur à 0.38 mm.

7. Dispositif de pompe selon la revendication 2,
**caractérisé en ce que** l'unité de commande et/ou régulation (18a ; 18b ; 18c) est prévue pour une régulation de la pompe (14a ; 14b ; 14c) en fonction d'un changement de la résistance électrique de la bobine électroaimant (16a ; 16b ; 16c).

8. Dispositif de pompe selon la revendication 2,
**caractérisé par** un capteur de température (24a ; 24b ; 24c) raccordé avec l'unité de commande et/ou régulation (18a ; 18b ; 18c) en termes de technologie de signaux, qui est prévu pour un captage d'une température de la bobine électroaimant (16a ; 16b ; 16c).

9. Dispositif de pompe selon la revendication 8,
**caractérisé en ce que** l'unité de commande et/ou régulation (18a ; 18b ; 18c) est prévue pour ajuster un débit volumétrique de la pompe (14a ; 14b ; 14c) en fonction de la température captée par le capteur de température (24a ; 24b ; 24c).

10. Dispositif de pompe selon l'une quelconque des revendications précédentes,
**caractérisé en ce que** l'unité de commande et/ou régulation (18a ; 18b ; 18c) est prévue pour ajuster un débit volumétrique de la pompe (14a ; 14b ; 14c) en fonction d'un type de boisson et/ou en fonction d'une variété de boisson.

11. Distributeur de boissons avec un dispositif de pompe (10a ; 10b ; 10c) selon l'une quelconque des revendications précédentes.

12. Procédé pour une commande d'un appareil ménager, en particulier pour une commande d'un distributeur de boissons (12a),
avec une pompe (14a ; 14b ; 14c) comprenant au moins une bobine électroaimant (16a ; 16b ; 16c),
et avec une unité de commande et/ou régulation (18a ; 18b ; 18c),
où l'unité de commande et/ou régulation (18a ; 18b ; 18c) ajuste, en fonction d'au moins une caractéristique, au moins un paramètre de pompe, qui est un débit volumétrique pour une pression donnée
où l'unité de commande et/ou régulation (18a ; 18b ; 18c) ajuste le débit volumétrique de la pompe (14a ; 14b ; 14c) à l'aide d'une coupure de phase ascendante, d'une modulation de largeur d'impulsions, d'une adaptation d'amplitude et/ou d'une adaptation de fréquence d'une alimentation électrique pour la pompe (14a ; 14b ; 14b),
**caractérisé en ce que** l'unité de commande et/ou régulation (18a ; 18b ; 18c) maintient, en exigences autrement égales, le débit volumétrique constant pendant et/ou entre des déchargements d'une portion de liquide.
